# EUROPEAN PATENT SPECIFICATION

(11) **EP 0 688 494 B1**
(45) Date of publication and mention of the grant of the patent: **27.03.2002**
(21) Application number: 95201648.3
(22) Date of filing: 19.06.1995
(51) Int. Cl.: A01D 78/10

(54) **A haymaking machine**
Heuwerbungsmaschine
Machine de fenaison

(30) Priority: 21.06.1994 NL 9401015; 16.09.1994 NL 9401501
(43) Date of publication of application: 27.12.1995
(73) Proprietor: MAASLAND N.V., 3155 PD Maasland (NL)
(72) Inventor: van den Engel, Alfonsus Jacobus, NL-3137 KC Vlaardingen (NL)
(74) Representative: Corten, Maurice Jean F.M.

(56) References cited:
- DE-A- 1 482 049
- DE-A- 1 632 835
- DE-A- 1 757 056
- NL-A- 7 314 323
- LANDBOUW MECHANISATIE, vol. 15, no. 7, July 1964 WAGENINGEN NL, pages 663-677, CRUCQ 'TREKKERS EN WERKTUIGEN OP DE D.L.G.'

## Description

The present invention relates to a hay-making machine according to the preamble of claim 1.

Such a hay-making machine is known from the leaflet "Krone-Kreiselzettwender KW". During operation, the processing members move the mowed crop lying on the ground from before the machine to therebehind. In particular when the machine, as viewed in the direction of travel, is adjusted such that it is leaning forward, the crop is moved not merely parallel to the ground but it is also thrown up. When the hay-making machine comprises a plurality of processing members which are disposed side by side and turn in the usual way in pairs from, and to each other, the crop is moved along as well as through the processing members and other parts of the machine. Especially, for a relatively long crop and/or a relatively wet crop, any protruding parts of the hay-making machine are obstacles to the crop being moved past and through the machine, resulting in that a part of the crop is left on the hay-making machine. Particularly the supporting means by which the machine rests on the ground at least during operation constitute obstacles, on which a relatively large amount of crop gets stuck. The accumulation in practice may in a problematic manner turn out in a very dense, black coloured substance which is no longer recognizable as crop and which is also difficult to remove from the construction. It also appears in practice that a suchlike accumulation may assume such a high volume to the effect that the friction arises between the accumulation and the wheel in such a form and amount that, in the event of a pneumatic tyre, the latter gets overheated, resulting in a blow-out. In the event that the wheel is provided with a solid rubber tyre, it has been found that the continually further winding of crop causes the pressure between the supporting arm and tyre to increase to such an extent that the tyre is eventually pushed off from the rim or causes the wheel to stop turning. It will be obvious that these phenomena are undesirable as well as highly disadvantageous.

The invention has for his object to provide a hay-making machine of the above type in which the mentioned drawbacks do not occur or are at least reduced to a considerable extent, in particular wherein the problem of stacking of crop on the extension of the wheel axle, and subsequent accumulation between wheel and the supporting arm thereof is solved to at least considerable extent.

In accordance with the invention this is achieved by the features as described in the characterizing part of claim 1.

In this way, according to the invention, an important cause of the accumulation in the above described way is taken away in that any crop that gets slung or gets stuck against the support arm during operation, is less prone to slide towards the horizontally extending wheel axle. The crop slung against the predominantly upwardly directed part of the support arm slides downwardly until the bend by which it merges into the lower most part of the supporting arm, which is predominantly directed along the plane of the earth. On the latter part the crop does not slide, or slides less easily, towards the wheel axle so that the crop accumulates near the bend. Contrary to the case at the axle, the fibres of the crop are, at this location of accumulation, lengthwise predominantly directed perpendicular to the side face of the wheel and are less prone to getting wound up. Instead it falls off the lower arm part with the help of the rubbing action of the wheel, because of unbalance of the arised pile, or because of vibrations of the machine.

It is further remarked that the above mentioned document discloses a coverer plate provided stationary on the extension of the wheel axle, covering the sides of the wheel, apparently to prevent crop from winding around rotational parts of the wheel. In this respect the document does not refer to the present problem of accumulation between supporting arm and wheel, neither does it points to the shape of the supporting arm as a solution to this problem.

In a preferred embodiment the lower most part of the support extends horizontally or in a downward direction. Though such a construction requires a larger amount of constructive material, it is on the one hand achieved that any possible sliding towards the wheel axle is made impossible, and on the other hand that the accumulation takes place closer to the ground, so that tufts of accumulated crop slide over the ground. By the latter action the accumulated crop regularly gets pulled off from the support, especially under moistly circumstances.

In a specific embodiment of the invention, the lowermost part of the supporting arm extends from the axis of rotation to approximately the tread on the rear side of the wheel. This arrangement has the advantage that there is no chance of crop which has fallen of the supporting arm on the ground getting stuck to the tire supported by the arm. In this way the chance of accumulation between supporting arm and wheel, particularly on the part aligned with the wheel axle is further reduced. Also, as the highest peripheral velocity of the wheel occurs near the tread, the tangle of crop accumulated can thus be lifted off in an effective manner.

According to a prefered feature of the invention the support is provided with a predominantly conically shaped guard element, covering at least the major part of an extension of the wheel axle that merges into, or is connected with, the supporting arm, which guard element narrows towards the end of the wheel axle. In this way it is realized that any crop that gets slung on to the support is only or at least mainly collected on the supporting arm. Such a construction is favourable in that crop may no longer pile up between the wheel and a support extending predominantly upwardly along the wheel side. The known construction is to some extend however, still vulnerable in that crop may rest on the upper part of the cylindrical shape and may be drawn into the cylindrical drum through the small distance necessary between the cylinder end that borders the turning wheel. According to a prefered idea of the present invention such possibility may be avoided entirely by providing such a drum with an essentially conical shape narrowing towards the relevant end of the wheel axle.

According to a prefered feature of the invention, the wheel is provided with a pneumatic tyre and the lowermost part of the supporting arm extends to at least halfway the distance from the wheel rim to the tyre circumference.

According to a prefered feature of the invention, the supporting arm is near its top divided into two mutually adjustable parts, by means of which the frame is adjustable in height.

According to yet another exemplary embodiment of the invention, the central part of the wheel side facing the supporting arm is protected by an at least semi-drum-shaped guard attached to the supporting arm. In a preferred embodiment of the invention, the supporting arm extends at least partly through the wall of the drum-shaped guard. Also in this embodiment the drum-shaped guard provides protection to both the wheel axle and a part of the supporting arm. Crop is left less readily on the relatively smooth drum, while the drum has also the advantage that it is of a larger diameter than the wheel axle, so that any crop will less rapidly wind round the drum. To prevent that the drum touches the ground in the event of uneven land, according to a further feature of the invention, the wall of the drum-shaped guard is approximately horizontal at the level of, or otherwise below the axis of rotation. According to still another feature of the invention, the drum-shaped guard element, as seen from aside, extends at least partly to beyond the wheel rim. According to yet another feature of the invention, the drum-shaped guard has a diameter amounting to approximately half that of a corresponding wheel.

Though perhaps needless to say, it is again stated that combinations of a lowermost part of a supporting arm according to the invention, guards according to the invention and drum-shaped guards, all of them as described above and hereinafter are within the scope of the inventive idea.

The invention will now be further explained with reference to the accompanying drawings, in which:
Figure 1 shows the rear view of a machine according to the invention;
Figure 2 is a cross-sectional view taken along line II - II in Figure 1 and shows a side view of a support for the machine according to the invention;
Figure 3 is a rear view according to arrow III in Figure 2;
Figure 4 is a representation of an alternative construction in a side view according to Figure 2;
Figure 5 is a cross-sectional view according to line V - V in Figure 4;
Figure 6 is a view of a construction not belonging to the invention;
Figure 7 is a view according to arrow VII in Figure. 6;
Figure 8 is a view of another construction not belonging to the invention;
Figure 9 shows a fourth alternative construction as a rear view in accordance with Figure 3;
Figure 10 is a side view showing further details of a supporting member of the machine according to Figure 1;
Figure 11 is a cross-sectional view of the construction according to line XI-XI in Figure 10;
Figure 12 shows a fifth alternative construction according to the invention in a representation corresponding with Figure 2;
Figure 13 is a rear view according to arrow XIII in Figure 12;
Figure 14 corresponds with Figure 1 and shows a view of a part of the machine according to an embodiment, wherein the wheel supports of the machine are mutually exchangeable without making use of any tools;
Figure 15 is a schematic representation of a plan view of the supports of the machine according to Figure 14, and
Figure 16 is a schematic representation according to Figure 15, on the understanding that it renders the machine after a mutual exchange of supports.

Corresponding parts in the drawings are indicated by identical reference numbers. Furthermore, the invention is by no means limited to the exemplary embodiments of the invention depicted and set forth here; these are only intended for illustration of the inventive idea.

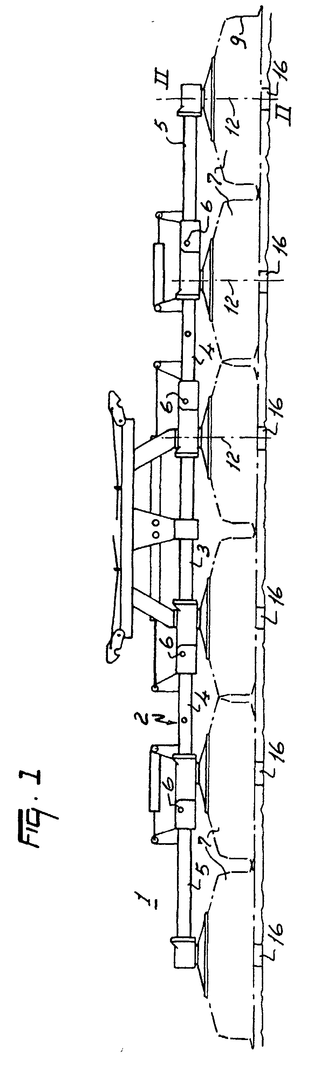

Figure 1 is a schematic representation of a rear view of a hay-making machine according to the invention, being a rotary tedder in the present case. The machine comprises a frame 2 composed of a central frame part 3 and, on either side of the latter, central intermediate frame parts 4 and two outermost frame parts 5. The central frame part 3 is provided with coupling means, through which the machine can be coupled to the three-point lifting hitch of a tractor. During operation, the different frame parts are capable of being mutually swivelled to a limited extent, namely on swivel shafts 6 essentially extending in the direction of travel. In addition, the machine comprises processing members 7 provided with tines near their periphery, by means of which tines any crop lying on the ground can be moved. The processing members 7 are capable of being motor-driven on a drive shaft directed essentially upwards, and that through a transmission, accommodated in the frame 2, which is capable of being connected to the power-take-off shaft of a tractor through a coupling shaft near the centre of the machine. In the present embodiment of the invention, the machine is equipped with six processing members which mutually cooperate in pairs. Two central processing members 7 are each bearing-mounted near an end of the central frame part 3 in the frame. To the outer side of this bearing, but above the relevant processing member 7, there is provided a first swivel shaft 6, through which a central intermediate frame part 4 is connected to the central frame part 3 by means of a fork. The frame part 4 is also provided with a processing member 7 on its outer end, while to the outer side of the bearing of this processing member in the frame, again in the manner as set forth hereinbefore, the outermost frame part 5, which is also provided with a processing member 7 near its end, is connected. The machine is further provided with a hydraulic adjusting cylinder which is connected with the different frame parts in such a way that, with the aid thereof, controlled from the tractor, the machine can be put into a position for transport, in which the central intermediate frame parts are essentially directed upwards and the outermost frame parts 5 have their ends facing each other. On the spot of the bearing of a supporting member 13, each of the frame parts is provided with a support 8 through which the machine rests on the ground.

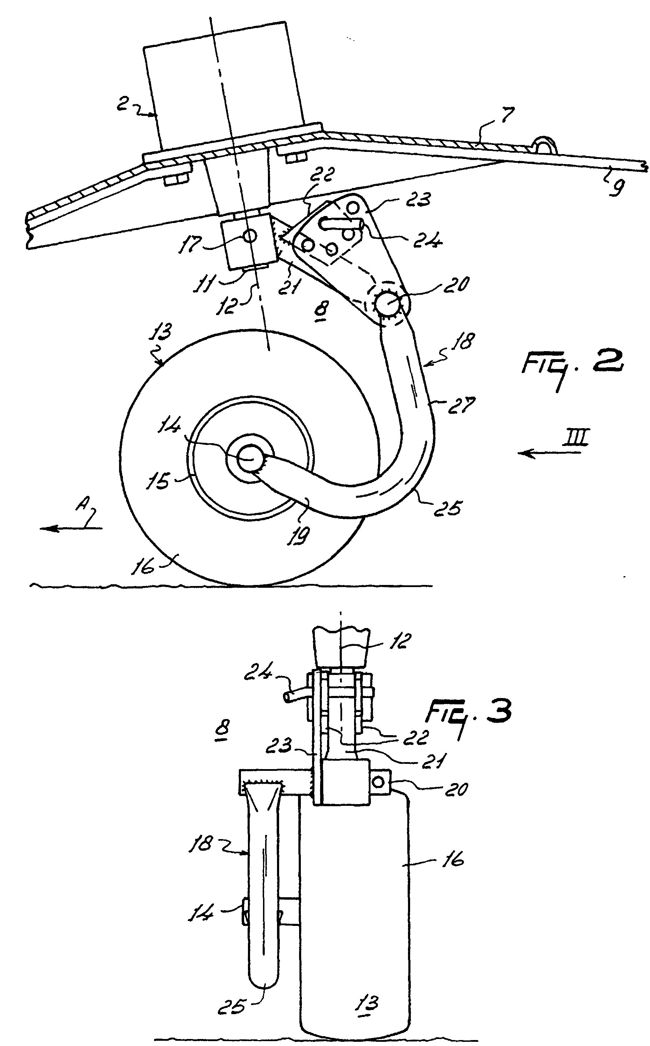

As may be seen from Figure 2, a supporting member 13 in the present embodiment of the invention is designed as a wheel in the form of a pneumatic tyre 16 which is capable of being pressurized and which is fitted on a rim 15 rotatably mounted on an axle 14 whose orientation, during operation, is at least essentially transverse to the direction of travel and horizontal, while in the present embodiment this axle 14 is also part of a supporting arm 18, via which arm the supporting member 13 is connected with the frame 2. In the present exemplary embodiment of the invention, the upper end 21 of a supporting arm 18 is fixed to an essentially upwardly extending journal 11 of the machine by means of a locking pin 17. The distance between the supporting member 13 and the relevant processing member 7, or the height thereof with respect to the ground, is adjustable by means of an adjusting device which is provided near the upper end 21 of the supporting arm 18. The adjusting device is a shaft part 20 extending parallel to the axle 14 and included in the supporting arm 18, on which shaft part 20 the upper supporting arm part 21 is capable of swivelling by means of a bush. The adjustment in height between the supporting member 13 and the frame 2 takes place by means of a locking pin 24 which can be fed parallel to the shaft 20 through two lugs 22 and 23 oriented perpendicularly to the shaft 20, one of which lugs is rigidly connected with the upper arm part 21, whereas the other one is rigidly mounted on the shaft part 20. A lowermost part 19 of the supporting arm 18 extends, according to the invention, from the axle 14 parallel to the side of the supporting member 13 in a downward and rearward direction, and subsequently, at approximately halfway the distance between the rim 15 and the circumference of the tyre 16, or the height of the tyre 16, it merges via a curved part 25 with a wide bend into a straight middle part 27 of the supporting arm 18. In the present embodiment, the radius of the curved supporting arm part 25 is approximately equal to the aforementioned height of the pneumatic tyre, so that the straight supporting arm part, as viewed from aside, is situated "out of" the supporting member 13. The middle part 27 extends predominantly in upward direction.

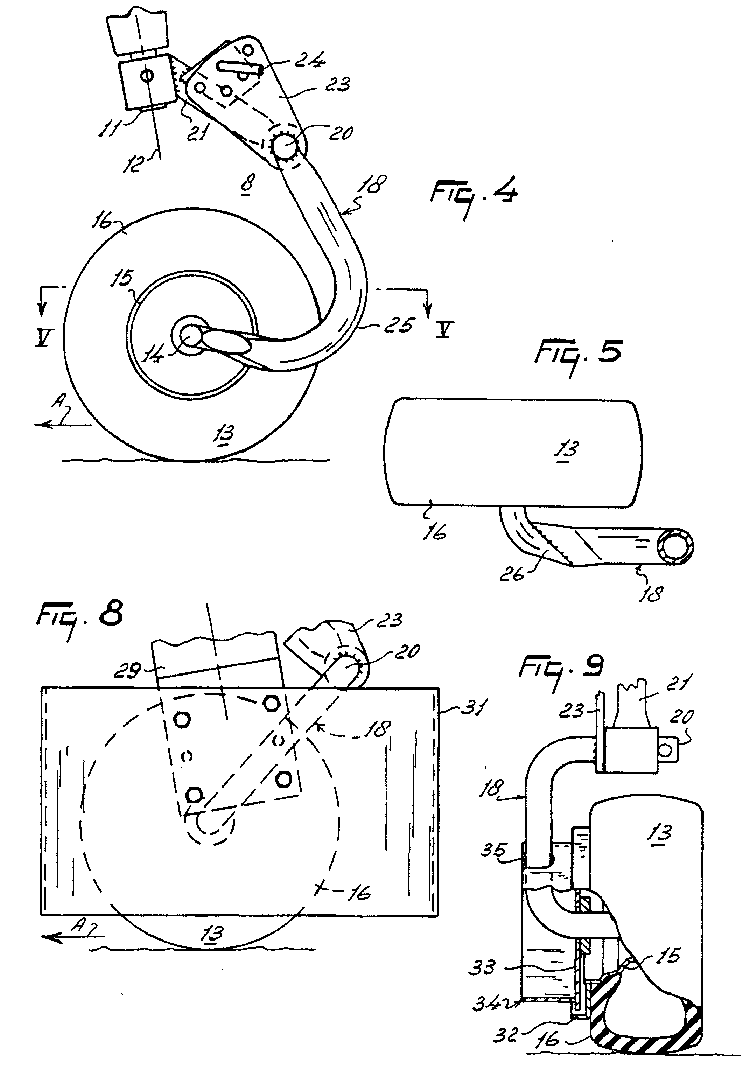

Figures 4 and 5 show a variant of the construction according to Figures 2 and 3, where, as may be seen from the cross-sectional view of Figure 5, the lowermost part of the supporting arm 18 with the supporting arm part 26 following a curve without any angular shapes merges into an axle part near the rim of the supporting member, which axle part corresponds with the axle part 14 as dealt with in the description of Figures 2 and 3.

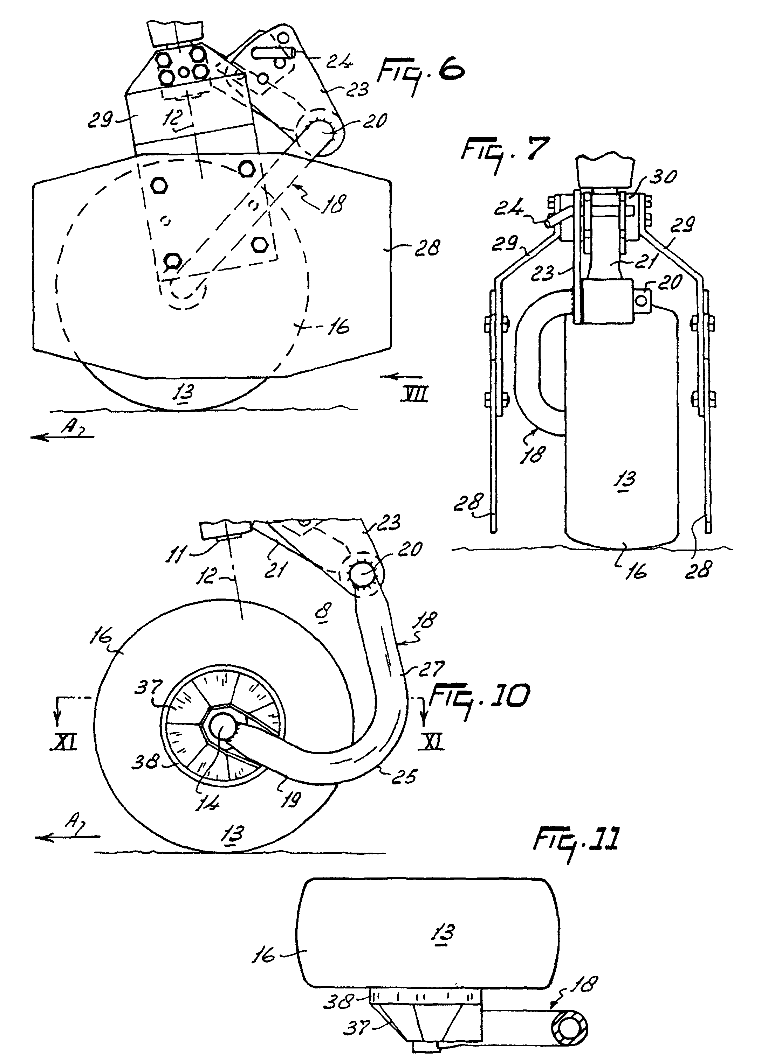

In an alternative embodiment as represented in Figures 6 and 7, a support 8 is, according to the invention, provided with guards 28. In the present embodiment, these consist of plates extending vertically and in the direction of travel, or parallel to the sides of a supporting member 13. Each of the plates has an essentially horizontal lower edge extending at least to underneath the axis of rotation of a supporting member 13 and preferably to near the rim of the relevant supporting member. With an upper edge, also extending essentially in a horizontal direction, the plates 28 extend vertically, as shown in the side view according to Figure 6, to above the supporting member 13. Near the rear side of a supporting member, the guards 28 also extend to beyond the supporting member 13, preferably by the amount of approximately half the radius of the supporting member. On the front side, the guards 28 also have a vertical edge which is beyond the supporting member 13. In a preferred embodiment, the lower edge of a guard 28 is in the form of an arc of a circle, the arrangement being such that, in the event of a change in the height adjustment of the frame 2 with respect to a supporting member 13, the guards 28 always keep tending to maintain a roughly constant distance to the ground. In the present embodiment, the guards 28 are connected adjustably in height with the bottom ends of supports 29, whose top ends are connected with the bush-shaped part of the upper supporting arm part 21 by means of bolts and an intermediate block 30. As may be seen from Figure 7, the supports 29 reach from their mounting positions sidewards past the supporting member 13 and that, at least on one side, in such a way that at least the lower half of a supporting arm 18 is also in between the guards 28.

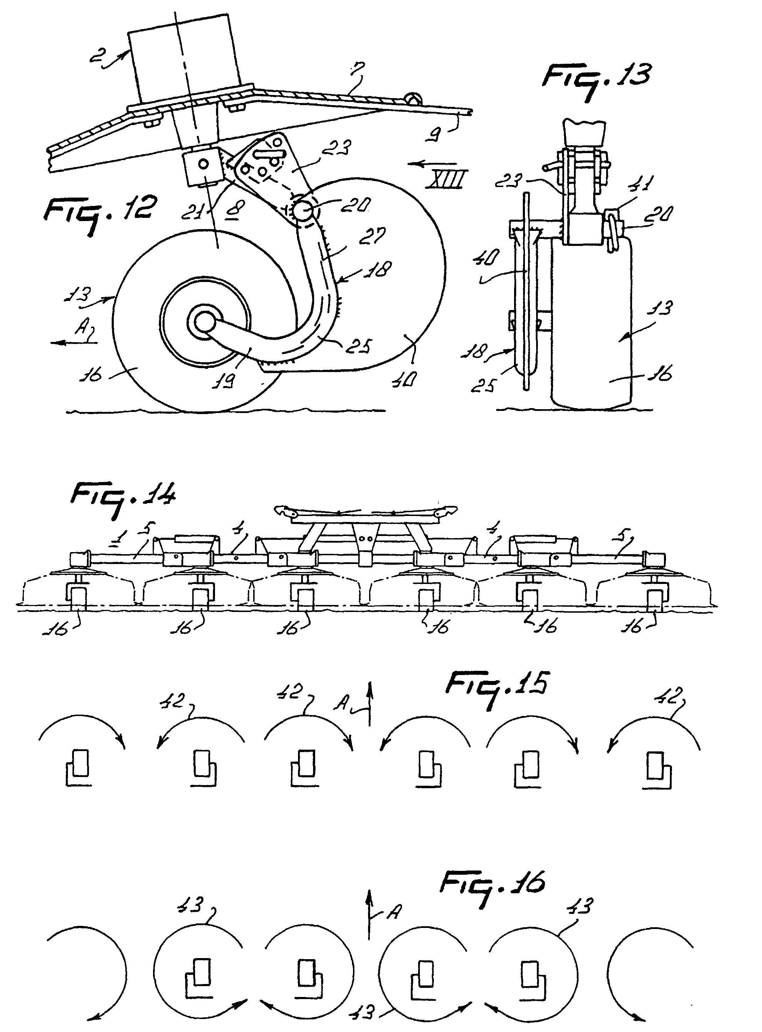

Figure 8 shows an embodiment which principally corresponds with that of Figures 6 and 7, with the difference that here the front side and the rear side of a supporting member 13 are protected, the arrangement being such that the guard 31, as seen in a plan view, according to the present embodiment, extends essentially more or less parallel to the full outline of the supporting member 13.

Figure 9 shows still another embodiment of the construction according to the invention, where the upright side of a wheel, next to which there is provided a supporting arm 18, is at least partly protected by means of a drum-shaped guard element 34. In the present embodiment, this drum-shaped guard element 34 is disposed concentrically with the axis of rotation of a supporting member 13, and the element is attached to the supporting arm 18. As may be seen from the rear view of Figure 9, the guard element 34 extends sidewards to just beyond the supporting arm 18. In the present embodiment, the diameter of the drum-shaped guard element 34 is larger than that of the rim. In the present embodiment, on the rim 15 there is provided an edge 32, a first part of which runs parallel to the side of the supporting member 13 along the tyre 16, and a second part of which is perpendicular to the first part and encircles the drum-shaped guard element 34. As is shown in Figure 9, the drum-shaped guard element 34 is also closed on the side facing the supporting member 13 by means of a round cover plate 33 having an edge which extends to beyond the circumference of the drum-shaped guard element. In combination with the edge 32 on the rim, the protruding edge of the plate 33 is more or less a protection against the ingress of crop between the drum-shaped guard element 34 and the rim 15 of the support.

Figures 10 and 11 represent an alternative embodiment of the drum-shaped guard element as depicted in Figure 9. Here, the guard element 37 extends from the outermost rim circumference via an essentially conical transition in sideward direction to virtually beyond a support 18. As shown in Figure 11, here, the rim may near its outer circumference be provided with a cylindrical projection 38 reaching in lateral direction to beyond the inner end of the conical guard element. As seen from aside as in Figure 10, the conical guard element 37 comprises a U-shaped opening so that the lower arm part 19 may pass along the side of the wheel 16. The view from above in Figure 11 shows that near this opening the guard element is formed so as to stretch out over the relevant part of the lower arm part 19.

Figures 12 and 13 also show a construction of a support 8 comprising a supporting member 13 with a supporting arm 18 bearingly mounted on the wheel axle. The supporting arm 18 comprises the earlier described lower arm part with further subdivisions 19, 25 and 27, and is pivotably bearing-mounted in a bush of an upper arm part 21 through a shaft 20 placed transversely to the lower arm part 19, 25, 27. According to the invention, the horizontal shaft 20 of the lower arm part 19, 25, 27 is axially retained, to prevent endwise sliding of the shaft in the bush, by means of the aforementioned plate 23 and a detachable quick-action locking pin 41 which is fed through the shaft 20 on the other side of the bush. Also according to the invention, a plate 40 oriented vertically and in the direction of travel A is mounted against the rear side of the lower arm part 19, 25, 27. This plate 40 has rounded contours. The plate 40 has an upper edge part situated at a level which is higher than the wheel 16, a lower edge part extending approximately at the height of the flange of the wheel 13, and a rear edge part which, measured along a line perpendicular to a local tangent, is at least 10 cms, and preferably at least 20 cms from the rear side of the arm part 27. The plate 40 extends predominantly along predominantly the length of the middle part 27 and of the curved part 25. In an advantageous embodiment a small strip, possibly forming a whole with the plate 40, is mounted in a vertical plane to the lower side of the lowermost arm part 19. In this way any tendency to winding of crop around said arm part 19 is impeded.

The construction according to Figures 12 and 13 embodies three measures which help to reduce the tendency to seizure of the wheels 16. Such a seizure is very often the result of accumulation of crop residues in between a wheel 16 and the corresponding supporting arm 18. A first measure relates to the shape of the lower arm part 19, 25, 27 which in this embodiment extends rearwards and slightly downwards from the wheel axle 14 to at least beyond the rim of the wheel 16 in such a way that it is inclined at an acute angle to the horizontal plane wherein the axis 14 of the wheel 16 extends. The remaining part 27 of the supporting arm 18 extends principally upwards. Any crop falling on the supporting arm 18 slides towards the wheel circumference owing to the position and shape of the lower arm part 19, 25, 27. In this place, crop residues can only accumulate to a certain maximum extent, because they drag along the ground or rub against the side of the tyre 16 upon exceeding this maximum value. In both cases, the accumulated crop residues are readily put aside. Crop may also simply fall off due to unbalance of an accreted pile of crop.

Two other measures take advantage of the nature of the crop and the effect of it on the operation of the machine. The nature of the crop is mainly determined by the crop moistness, by the crop length, by the type of crop which determines factors such as the hairiness of the crop surface and the wax layer thereon, and by the time of harvesting: in the event of grass, a springtime crop is usually firmer than an autumn crop under the same conditions. In many cases, the time of haymaking is the most dominating factor. According to the invention, it has turned out that in general a springtime crop and a relatively short and dry crop is flung-in at a neighbouring processing member, at the front side of the machine. Here, among other things, it lands against the supporting arm 18 and the wheel 16. Generally, the same effect occurs on the rear side of the machine in autumn and with a relatively long and moist crop. To keep the amount of crop that strikes the supporting arm 18 down to a minimum, it is, according to the invention, important that the supporting arm 18 is placed on that side of the wheel 16 where, as it were, it is guarded against crop being thrown into the processing member. According to the above explanation, the side where the arm 18 is guarded, is changeable so as to adapt to springtime and autumn or to the prevailing conditions. To be capable of responding adequately to the conditions, it is therefore important, according to the invention, that the shaft 20 of the lower arm part 19, 25, 27 is locked not as is usual, for instance, by means of a locking pin in a quasi-permanent manner against endwise sliding of the shaft in the bush of the upper arm part 21, but, on the contrary, by means of a quickly removable locking element such as the quick-action locking pin 41 represented in Figure 13. Owing to this measure, each of the lower supporting parts, i.e. the wheel 16 and the lower arm part 19, 25, 27 of the supporting arm 18, in its entirety, can be exchanged with the lower arm part of a neighbouring processing member 7, depending on the circumstances. So, the supporting arm 18 is always fitted on the most favourable side of a wheel 16. By using the quick-action locking pin 41 in the described place in the machine, a practical exchangeability has been realized, i.e. an exchangeability which does not involve financial efforts, consumption of time or necessary availability of tools.

Figure 14 shows a rear view of the machine in a configuration including an arrangement of the supporting arms 18 which is excellently suitable for tedding a springtime crop or a relatively dry and short-stemmed crop: with two cooperating processing members, such as for instance the leftmost pair of processing members 7 depicted in Figure 14, bunches of crop are continually thrown into the outermost processing member 7 by the complementary one. In Figure 15 this is shown in a schematic representation of a plan view. So, in the view of Figure 14, the supporting arm 18 at the outermost processing member is on the left-hand side of the wheel, and the supporting arm 18 at the complementary processing member 7, the leftmost processing member but one, is on the right-hand side of the wheel 13. In autumn or in circumstances where the crop is relatively long and wet, the lower arm parts 19, 25, 27 of the supporting arm 18 should be interchanged in such a way that, for at least the processing member in the leftmost position but one, the lower arm part 19, 25, 27 is situated on the left-hand side of the wheel 13. By this it is to a large extent guarded against crop being thrown-in by the processing member 7 situated in the leftmost position but two. In Figure 16, an arrangement of the wheels suitable for the autumn is shown in a schematic representation of a plan view. The outermost wheels 13, not drawn in this schematic diagram as compared against Figure 15, can always remain in the position as shown in Figures 14 and 15. The arrows 42 and 43 in Figures 15 and 16 denote the senses of rotation of the processing members. The location and direction of arrowheads indicate schematically the most important position and direction of the undesirable but inevitable distribution of crop leading to the problems described above. In the same way and for the same purpose, also the locking pin 17 may be embodied by a guickly removable locking element performing the same function as that of the locking element 41. The entire support 18 may than positioned predominantly at the front half of a processing member 7. The plate 40 then extends in front of the supporting arm 18. Such a construction also enables an adaptation to the prevailing conditions as described hereinafter.

A third contribution to the decrease in the effect of crop accretion in between supporting arm 18 and wheel 13 is made by the plate or fin 40 placed centrally on the rear side of the lower arm part 19, 25, 27, which is tubular in the present design. The plate 40 is situated essentially in, or at least parallel to the imaginary plane defined by the curved arm part 19, 25, 27. The plate 40 enlarges the surface area of that part of the arm 18 which projects beyond the wheel 13 in such a way that crop residues landing at the part of the arm 18 which is not protected by the wheel 13 can not wind any more round the arm 18 and, consequently, are directly diverted towards the ground. According to the invention, the plate 40 is disposed at least against that part of the arm 18 which is out of the circumference of the wheel 13 and at least against the essentially vertically extending part hereof. The plate 40 may be made of metal and may be welded against. According to a preferred embodiment of the invention, not shown in the drawings, the arm 18 is provided with lips, welded or clamped thereto, to which a plate 40 is bolted. Such a construction is particularly useful when applying wood or synthetic material for the plate 40.

## Claims

1. A hay-making machine (1) comprising a frame (2), in which at least one processing member (7) capable of being motor-driven is bearing-mounted on a drive shaft directed essentially upwards, and supporting means (8: 16, 18) through which the machine rests on the ground in operative position, with this support (8) being provided with a wheel (16) rotatable about a wheel axle (14) and a supporting arm (18) extending between the wheel axle (14) and the frame (2), **characterized in that**, in the operative position, at least a lower part (19) of the supporting arm (18) extends away from the wheel axle (14) in a rearward direction with respect to the working direction of the machine (1) and in a horizontal plane or in a plane under an angle of less than 30° therewith, prior to merging into a predominantly upwardly directed part (27) of the supporting arm (18).

2. A hay-making machine as claimed in claim 1, **characterized in that** the lower part (19) extends horizontally or in a downward direction.

3. A hay-making machine as claimed in any one of the preceding claims, **characterized in that** the lower part (19) has a length of at least half the radius of a wheel (16) connected to the supporting arm (18) or capable of being connected therewith.

4. A hay-making machine as claimed in any one of the preceding claims, **characterized in that** the lower part (19) of the supporting arm (18) extends at least approximately parallel to a side face of the wheel (16).

5. A hay-making machine as claimed in any one of the preceding claims, **characterized in that** the wheel (16) is provided with a pneumatic or rubber like tire and that the lower part (19) of the supporting arm (18) extends to at least half way the distance from the wheel rim to the tire circumference.

6. A hay-making machine as claimed in any one of the preceding claims, **characterized in that** the support (8) is provided with a predominantly conically shaped guard element (37), covering at least the major part of an extension of the wheel axle (14) that merges into, or is connected with, the supporting arm (18), which guard element (37) narrows towards the end of the wheel axle (14).

7. A hay-making machine as claimed in claim 6, **characterized in that** the guard element (37) is mounted such in the support (13) that its greatest circumference borders to a turning part (16) of the support (8).

8. A hay-making machine as claimed in claim 6 or 7, **characterized in that** the greatest circumference of the protective member (37) is surrounded by a horizontally extending part of the rim of the wheel (16).

9. A hay-making machine as claimed in claim 6, 7 or 8, **characterized in that**, as seen in side elevation, the guard element (37) comprises a U-shaped opening, the guard element also covering at least part of the lower part (19) of the support.

10. A hay-making machine according to any one of the preceding claims, **characterized in that** a predominantly upwardly directed part (27) of a supporting arm (18) is provided with a plate-shaped member (40) extending in a predominantly vertical plane and predominantly within the direction of operative travel.

11. A hay-making machine according to claim 10, **characterized in that** the plate (40) is mounted against the side of the supporting arm (18) that faces away from the wheel (16) as seen in a line of operative travel.

12. A hay-making machine as claimed in claim 10 or 11, **characterized in that** the plate (40) has an upper edge which extends at least to the upper end of a relevant arm part (25, 27) and a rear edge which, measured along a line perpendicular to a local tangent, is at least 10 cms from the rear side of the relevant arm part (19, 25, 27).

13. A hay-making machine as claimed in claim 10, 11 or 12 , **characterized in that** the plate shape extends along the at least virtually entire length of the relevant predominantly upwardly directed part (27) of the supporting arm (18).

14. A hay-making machine as claimed in any one of the claims 11-13, **characterized in that** the plate (40) extends along the part, as seen in a side view, which does not overlap the wheel (16), of the relevant lower arm part (19).

15. A hay-making machine as claimed in any one of the preceding claims, **characterized in that** a plate shaped member (40) extends in a vertical direction downwardly along at least a part of the lowermost part (19, 25) of the supporting arm (18).

## Patentansprüche

1. Heuwerbungsmaschine (1) mit einem Rahmen (2), in dem mindestens ein motorisch antreibbares Bearbeitungsglied (7) an einer im wesentlichen aufwärts gerichteten Antriebswelle in Lagern gehalten ist, sowie mit Stützvorrichtungen (8: 16, 18), durch die die Maschine in der Arbeitslage auf dem Boden abgestützt ist, wobei diese Stütze (8) mit einem um eine Radachse (14) drehbaren Rad (16) und einem Stützarm (18) versehen ist, der sich zwischen der Radachse (14) und dem Rahmen (2) erstreckt,
**dadurch gekennzeichnet, daß** sich in der Arbeitslage mindestens ein unterer Teil (19) des Stützarmes (18) in von der Radachse (14) abgewandter Richtung in bezug auf die Arbeitsrichtung der Maschine (1) nach hinten und in einer horizontalen Ebene oder in einer von dieser um weniger als 30° abweichenden Ebene erstreckt, bevor er in einen überwiegend aufwärts gerichteten Teil (27) des Stützarmes (18) übergeht.

2. Heuwerbungsmaschine nach Anspruch 1,
**dadurch gekennzeichnet, daß** sich der untere Teil (19) in horizontaler Richtung oder nach unten erstreckt.

3. Heuwerbungsmaschine nach einem der vorhergehenden Ansprüche,
**dadurch gekennzeichnet, daß** die Länge des unteren Teiles (19) mindestens dem halben Radius eines Rades (16) entspricht, das mit dem Stützarm (18) verbunden ist oder mit ihm verbunden werden kann.

4. Heuwerbungsmaschine nach einem der vorhergehenden Ansprüche,
**dadurch gekennzeichnet, daß** sich der untere Teil (19) des Stützarmes (18) zumindest annähernd parallel zu einer Seitenfläche des Rades (16) erstreckt.

5. Heuwerbungsmaschine nach einem der vorhergehenden Ansprüche,
**dadurch gekennzeichnet, daß** das Rad (16) mit einem Luftreifen oder gummiartigen Reifen versehen ist, und daß sich der untere Teil (19) des Stützarmes (18) mindestens über die halbe Entfernung der Radfelge von dem Reifenumfang erstreckt.

6. Heuwerbungsmaschine nach einem der vorhergehenden Ansprüche,
**dadurch gekennzeichnet, daß** die Stütze (8) mit einem überwiegend konisch geformten Schutzelement (37) versehen ist, das zumindest den größeren Teil einer Verlängerung der Radachse (14) abdeckt, die in den Stützarm (18) übergeht oder mit ihm verbunden ist, wobei sich das Schutzelement (37) zum Ende der Radachse (14) hin verjüngt.

7. Heuwerbungsmaschine nach Anspruch 6,
**dadurch gekennzeichnet, daß** das Schutzelement (37) in der Stütze (13) derart angebracht ist, daß sein größter Umfang an einen rotierenden Teil (16) der Stütze (8) angrenzt.

8. Heuwerbungsmaschine nach Anspruch 6 oder 7,
**dadurch gekennzeichnet, daß** der größte Umfang des Schutzgliedes (37) von einem sich horizontal erstreckenden Teil der Felge des Rades (16) umgeben ist.

9. Heuwerbungsmaschine nach Anspruch 6, 7 oder 8,
**dadurch gekennzeichnet, daß** das Schutzelement (37) in Seitenansicht eine U-förmige Öffnung aufweist, wobei das Schutzelement auch zumindest einen Teil des unteren Teiles (19) der Stütze abdeckt.

10. Heuwerbungsmaschine nach einem der vorhergehenden Ansprüche,
**dadurch gekennzeichnet, daß** ein überwiegend aufwärts gerichteter Teil (27) eines Stützarmes (18) mit einem plattenförmigen Glied (40) versehen ist, das sich in einer überwiegend vertikalen Ebene und überwiegend in Arbeitsrichtung erstreckt.

11. Heuwerbungsmaschine nach Anspruch 10,
**dadurch gekennzeichnet, daß** die Platte (40). auf der Seite des Stützarmes (18) angebracht ist, die in Arbeitsrichtung betrachtet von dem Rad (16) abgewandt ist.

12. Heuwerbungsmaschine nach Anspruch 10 oder 11,
**dadurch gekennzeichnet, daß** die Platte (40) einen oberen Rand aufweist, der sich mindestens bis zum oberen Ende eines entsprechenden Armteiles (25, 27) erstreckt, sowie einen hinteren Rand, der senkrecht zu einer lokalen Tangente gemessen mindestens 10 cm von der Rückseite des betreffenden Armteiles (19, 25, 27) entfernt ist.

13. Heuwerbungsmaschine nach Anspruch 10, 11 oder 12,
**dadurch gekennzeichnet, daß** sich die Plattenform zumindest virtuell über die gesamte Länge des entsprechenden, überwiegend aufwärts gerichteten Teiles (27) des Stützarmes (18) erstreckt.

14. Heuwerbungsmaschine nach einem der Ansprüche 11 bis 13,
**dadurch gekennzeichnet, daß** sich die Platte (40) in Seitenansicht entlang desjenigen Teiles des entsprechenden unteren Armteiles (19) erstreckt, der das Rad (16) nicht überlappt.

15. Heuwerbungsmaschine nach einem der vorhergehenden Ansprüche,
**dadurch gekennzeichnet, daß** sich ein plattenförmiges Glied (40) in vertikaler Richtung nach unten entlang zumindest eines Teiles des untersten Teiles (19, 25) des Stützarmes (18) erstreckt.

## Revendications

1. Machine pour la fenaison (1) comprenant une structure (2), dans laquelle au moins un élément de traitement (7) capable d'être entraîné par un moteur est monté sur un arbre d'entraînement dirigé essentiellement vers le haut, et des moyens de support (8 : 16, 18) à travers lesquels la machine repose sur le sol dans une position de fonctionnement, ce support (8) étant doté d'une roue (16) pouvant pivoter autour d'un essieu de roue (14) et un bras de support (18) s'étendant entre l'essieu de roue (14) et la structure (2), **caractérisée en ce que**, dans la position de fonctionnement, au moins une partie inférieure (19) du bras de support (18) s'étend à distance de l'essieu de roue (14) vers l'arrière par rapport à la direction de fonctionnement de la machine (1) et sur un plan horizontal ou sur un plan en dessous d'un angle inférieur à 30° avec celle-ci, avant de fusionner en une partie dirigée principalement vers le haut (27) du bras de support (18).

2. Machine pour la fenaison selon la revendication 1, **caractérisée en ce que** la partie inférieure (19) s'étend horizontalement ou vers le bas.

3. Machine pour la fenaison selon l'une quelconque des revendications précédentes, **caractérisée en ce que** la partie inférieure (19) présente une longueur d'au moins la moitié du rayon d'une roue (16) reliée au bras de support (18) ou capable d'être reliée à celui-ci.

4. Machine pour la fenaison selon l'une quelconque des revendications précédentes, **caractérisée en ce que** la partie inférieure (19) du bras de support (18) s'étend au moins de manière approximativement parallèle à la face latérale de la roue (16).

5. Machine pour la fenaison selon l'une quelconque des revendications précédentes, **caractérisée en ce que** la roue (16) est dotée d'un pneumatique ou d'un pneu en caoutchouc et **en ce que** la partie inférieure (19) du bras de support (18) s'étend sur au moins la moitié de la distance à partir du bord de la roue jusqu'à la circonférence du pneu.

6. Machine pour la fenaison selon l'une quelconque des revendications précédentes, **caractérisée en ce que** le support (8) est doté d'un élément de protection de forme principalement conique (37), recouvrant au moins la majeure partie d'une extension de l'essieu de roue (14) qui fusionne en, ou est relié au bras de support (18), lequel élément de protection (37) rétrécit vers l'extrémité de l'essieu de roue (14).

7. Machine pour la fenaison selon la revendication 6, **caractérisée en ce que** l'élément de protection (37) est monté dans le support (13) de telle sorte que sa circonférence la plus grande entoure une partie rotative (16) du support (8).

8. Machine pour la fenaison selon la revendication 6 ou 7, **caractérisée en ce que** la circonférence la plus grande de l'élément de protection (37) est entourée par une partie du bord de la roue (16) s'étendant horizontalement.

9. Machine pour la fenaison selon la revendication 6, 7 ou 8, **caractérisée en ce que**, comme on le voit en élévation latérale, l'élément de protection (37) comprend une ouverture en forme de U, l'élément de protection recouvrant également au moins une partie de la partie inférieure (19) du support.

10. Machine pour la fenaison selon l'une quelconque des revendications précédentes, **caractérisée en ce qu'**une partie dirigée principalement vers le haut (27) d'un arbre de support (18) est dotée d'un élément en forme de plaque (40) s'étendant sur un plan principalement vertical et principalement dans la direction de déplacement de fonctionnement.

11. Machine pour la fenaison selon la revendication 10, **caractérisée en ce que** la plaque (40) est montée contre le côté de l'arbre de support (18) qui fait face à distance à partir de la roue (16), comme on le voit sur une ligne de déplacement de fonctionnement.

12. Machine pour la fenaison selon la revendication 11 ou 12, **caractérisée en ce que** la plaque (40) présente un bord supérieur qui s'étend au moins vers l'extrémité supérieure d'une partie appropriée du bras (25, 27) et un bord arrière qui, mesuré le long d'une ligne perpendiculaire à une tangente locale, est situé à au moins 10 cm à partir du côté arrière de la partie appropriée du bras (19, 25, 27).

13. Machine pour la fenaison selon la revendication 10, 11 ou 12, **caractérisée en ce que** la forme en plaque s'étend le long d'au moins pratiquement la longueur totale de la partie appropriée dirigée principalement vers le haut (27) du bras de support (18).

14. Machine pour la fenaison selon l'une quelconque des revendications 11 à 13, **caractérisée en ce que** la plaque (40) s'étend le long de la partie, comme on le voit sur une vue latérale, qui ne chevauche pas la roue (16), de la partie inférieure appropriée du bras (19).

15. Machine pour la fenaison selon l'une quelconque des revendications précédentes, **caractérisée en ce que** l'élément en forme de plaque (40) s'étend dans une direction verticale vers le bas le long d'au moins une partie de la partie la plus inférieure (19, 25) du bras de support (18).
